# EUROPEAN PATENT APPLICATION

(11) **EP 4 112 988 A1**
(43) Date of publication of application: **04.01.2023**
(21) Application number: 21461558.5
(22) Date of filing: 28.06.2021
(51) Int. Cl.: F16L 33/035, F16L 33/12, B64D 1/00, F16L 3/237, F16L 23/04, F16L 23/06, F16L 25/02, F16L 39/00, F16L 39/02

(54) **CLAMP ASSEMBLY**

(71) Applicant: Goodrich Corporation, Charlotte, NC 28277 (US)
(72) Inventor: KROCZEK, Piotr, 51-317 Wroclaw (PL); SAPIJA, Dariusz, 51-317 Wroclaw (PL); KUROWSKA, Agata, 51-317 Wroclaw (PL)
(74) Representative: Dehns

(57) **Abstract**

A clamp assembly comprising a plurality of clamps (20, 30) each comprising two clamp arms (21, 22, 31, 32) pivotal relative to each other about a hinge point (23, 33), and a common connector part (40) joining two or more of said clamps to each other at their hinge points.

## Description

### TECHNICAL FIELD

The present disclosure relates to a clamp or a connector assembly for connecting components to form a fluid flow conduit.

### BACKGROUND

There are many applications where components such as tubes, pipes or connector pieces have to be joined together to form a conduit or passage for the flow of fluid such as water, gas, fuel, oil etc. The components have to be connected in a fluid tight manner to prevent leakage and must be securely fastened. In many cases, it is also necessary that the fastening be releasable to allow the connected components to be disconnected. Connector parts may be secured together by a form fit or friction fit and provided with seals around the join to prevent leakage. Often connector parts are connected by pushing one connector part into the other and then securing the connection by means of a clamp around the outside of the area where the connector parts join.

One example of where connector parts need to be combined to form a flow conduit is where a flow valve is used in a system. The valve is provided to regulate the flow of fluid through the pipes of the system and is therefore provided in the flow path(s). A valve will generally have one or more connector parts defining fluid inlets to, and fluid outlets from the valve. These are arranged to be fluidly connected to the fluid flow lines of the system in which the valve is used so that when the valve is open, a flow passage or conduit is defined from a system line, through an inlet defined by a valve connector part, through the valve, through an outlet defined by a connector part of the valve and into a system line connected to the outlet.

In a water system, for example, water may be provided from a supply to a tank via a valve and/or from the tank to an end user or as overflow via a valve. The valve needs to be securely and fluidly connected by connector parts to the lines from the supply, to the tank and from the tank to the end user/overflow. The connection between the valve and the lines must be fluid-tight to prevent leakage.

For certain applications, e.g. (but not only) in aircraft water systems, there are specific industry/safety/quality requirements dictating the type of clamps that must be used to secure a connection between two connector parts. Conventionally for such systems, a first connector part is designed to have a slightly smaller diameter than the opposite connector part such that the smaller connector part can be pushed into the larger connector part. Seals, e.g. O-ring seals, may be provided in the area inside the larger connector part, or on the outside of the smaller connector part, where the two parts overlap to ensure a tight fight. A clamp is then secured around the overlapping area to ensure a secure connection.

In some applications, however, the connections are provided in constrained areas or are limited by the shape and configuration of the system part, such that it is not easy, or sometimes not possible, to secure the clamp around a push-fit connection as required. For example, valves have recently been designed having several ports around the valve that need to be connected to cooperating connector parts at different angles e.g. at e.g. 90 degree separation, or where there are two or more ports adjacent each other on the same side at different levels. Because of the size of the conventional clamps, there needs to be enough space between adjacent ports to accommodate the size of the clamp. This restricts the design and arrangement of the ports or components to be connected.

There is, therefore, a need for a clamp connector assembly that enables a secure, fluid-tight connection of two connector parts even in such constrained spaces, and that allows the connection to be secured by a clamp as required.

### SUMMARY

According to the present disclosure, there is provided a clamp assembly comprising a plurality of clamps each comprising two clamp arms pivotal relative to each other about a hinge point, and a common connector part joining two or more of said clamps to each other at their hinge points.

Each clamp arm may have a curved shape with a first end at the hinge point and a second free end.

Each clamp may further comprise a locking mechanism e.g. a releasable latch provided on the clamp arms, for securing the clamp arms in a closed position.

In an example, the clamp arms pivot between an open position and a closed position in which the clamp arms define, between them, a space to receive a connection joint to be clamped.

A provided is a fluid system comprising a valve arranged in a fluid flow path to regulate the flow of fluid therethrough, the valve connected to the fluid flow path by means of a clamp assembly as claimed in any preceding claim.

The fluid system may be one in which the valve has a plurality of ports to be connected to fluid lines of the system, and wherein the clamp assembly is arranged such that each clamp is positioned to connect a respective one of the ports to a respective one of the fluid lines and may be e.g. a water system having a water tank connected to the valve via one or more fluid lines.

Also provided is a method of connecting a first connector part to a second connector part to define a first fluid flow conduit therethrough, and connecting a third connector part to a fourth connector part to define a second fluid flow conduit therethrough, the method comprising aligning the first and second connector parts with each other such that a fluid flow passage through the first connector part is aligned with a fluid flow passage through the second connector part to define the first fluid flow conduit, aligning the third and fourth connector parts with each other such that a fluid flow passage through the second connector part is aligned with a fluid flow passage through the fourth connector part to define the second fluid flow conduit, positioning a clamp assembly as claimed in any of claims 1 to 7, with the arms in an open position, between the first and the second fluid flow conduits, pivoting the clamp arms of a first of the clamps to close around the first fluid flow conduit, and pivoting the clamp arms of a second of the clamps to close around the second fluid flow conduit.

The method may further comprise securing the clamps in a closed position.

### BRIEF DESCRIPTION

Preferred embodiments will now be described by way of example only. Most of the description relates to the use of the clamp assembly used for connecting a valve in a fluid system, but the clamp assembly of the disclosure is advantageous in many other applications where two connector parts need to be connected to define a conduit therebetween.
Figure 1 shows a valve having two adjacent ports each connected to a line via a conventional connector assembly and clamp, by way of background explanation.
Figure 2 shows a perspective view of a clamp assembly according to this disclosure.
Figure 3 shows the assembly of Fig. 2 in the open position.
Figure 4 shows an example of how a clamp assembly according to this disclosure may be used.
Figure 5 shows an example of a system using a clamp assembly according to the disclosure on one side and a conventional clamp on the other side, for comparison.

### DETAILED DESCRIPTION

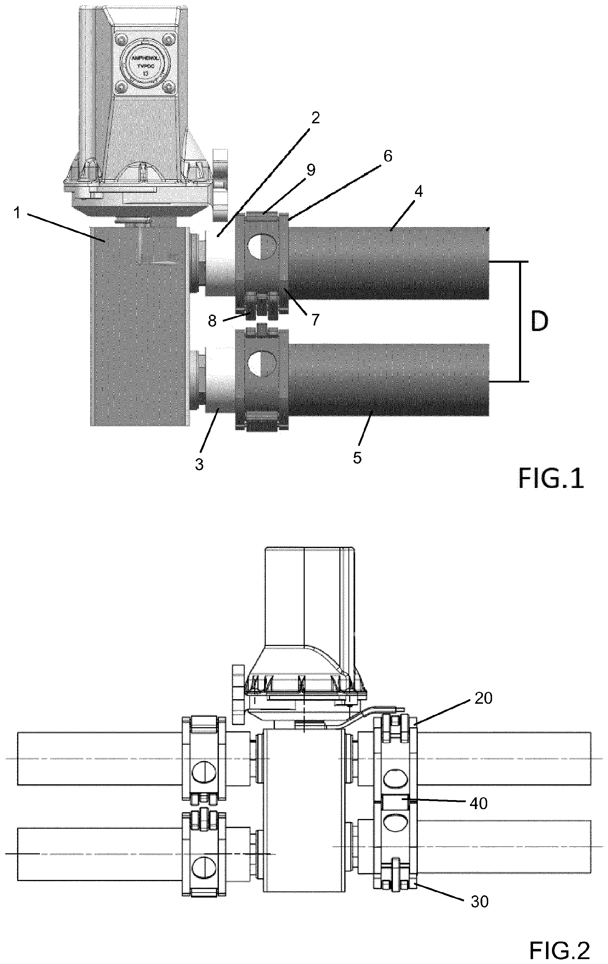

Referring first to Fig. 1, a conventional clamp will be briefly described. The figure shows an example of a valve 1 having two adjacent ports 2, 3 each to be connected to a different part or line 4, 5. To connect the valve 1 into the fluid path of the system it is necessary to connect the first and second ports 1, 2 to the respective components/lines 4, 5 to define a fluid flow conduit. Conventionally, the ports and the lines are connected by pushing the line connector 3 into the connector of the port 1 and the two parts are then secured together by means of a clamp 6 that is fastened around the connectors where the parts overlap. Conventionally, the clamp 6 is a clamp shell clamp which comprises two curved arms 7 pivotally connected by a hinge 8. The arms open about the hinge to receive the parts to be connected and then close around the parts and are secured in the closed position by a latch or lock 9 that can be opened to remove the clamp 6 if desired. Because of the size of the clamp, and, particularly the hinge 8, it can be seen from Fig. 1 that there needs to be sufficient space between the two ports/connections to accommodate the clamps. This minimum spacing is represented in Fig. 1 by D. This means that the overall valve size also need to be appropriately large. The larger the valve, the more space it needs to house it, the more expensive it is and the heavier it is. In many applications, e.g. in aircraft systems, there is a need to minimise the size and weight of system parts.

Another problem with the clamp arrangement of Fig. 1 is that relative rotation can occur between the clamp and the connecting parts. Therefore, if other parts are connected to the connected components 3, 4, they can rotate relative to the valve and may collide with other system parts.

The clamp assembly of this disclosure reduces the space required between two connections and, therefore, the overall size of the assembly and system, and also prevents relative rotation of the parts of the system.

These objectives are achieved by forming a clamp assembly that combines two or more clamps into a single unit as will be described further below.

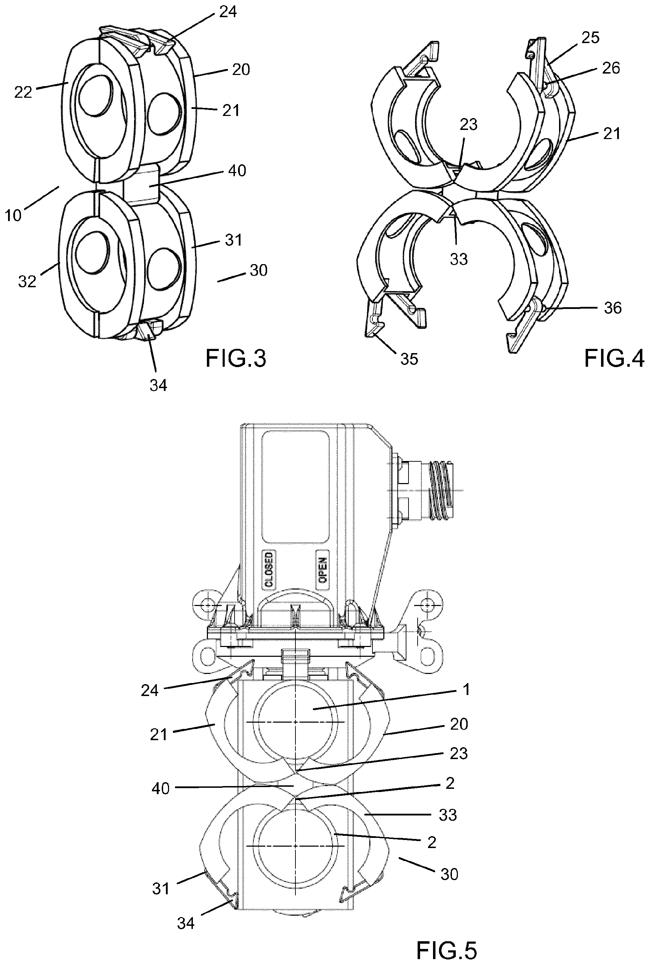

As seen in Figs. 2 and 3, the assembly 10 combines two clamps 20, 30 each having a pair or relatively pivotable arms 21, 22, 31, 32 pivotal about a respective hinge point 23, 33. The hinge points 23, 33 of the two clamps are joined to each other at a common connector part 40. The connector part may be made of a material that has some flexibility and/or can be made of the same material as the rest of the clamp. The opposite ends of the arms 21, 22, 31, 32 come together when the clamps are closed, as shown in Fig. 2, and are secured by a locking mechanism 24, 34 which may the in the form of a latch or lock or some form of catch or detent mechanism. In the example shown, the locking mechanism comprises latch arms 25, 35 that pivot and engage with a bar 26, 36 on the opposing arm, but other locking mechanisms can also be envisaged.

As with the conventional clamp, when the arms are closed, each clamp 20, 30 locks around a connection joint between two connecting parts to secure the connecting parts together. To release the connection, the locking mechanism is opened and the clamp arms pivoted to the open position as shown in Fig. 3.

Figure 4 shows how the clamp assembly can be fitted to a two port valve such as shown in Fig. 1. The assembly is fitted, in its open position, with the hinge points and connector part in the space between the two connection joints. The clamp arms are then pivoted to the closed position where they are secured by the locking mechanism 24, 34.

As can be seen by comparing the conventional two clamp system on the right-hand side of Fig. 5 with the clamp assembly of the disclosure shown on the left-hand side of Fig. 5, the assembly of the disclosure requires less space between the two connecting parts (as indicated by J) than that, D, of the conventional arrangement. Also, because the two clamps are fixed relative to each other, it is not possible for one clamp to move relative to the system or for the parts held by the clamp to rotate relative to the system. The combined, single unit assembly is also quicker and easier to assemble than two or more separate clamps.

Whilst the assembly has been described having two clamps combined into a single unit, the same principles can be used to combine three or more clamps into a single unit. The clamps can be in the same plane or in different planes and orientations, at angles or offsets relative to each other, and can be the same or different shapes and/or sizes.

The valve shown here is just one example of where the assembly of the disclosure may be used and its structure and operation is not limiting on the clamp assembly of this disclosure.

## Claims

1. A clamp assembly comprising a plurality of clamps (20, 30) each comprising two clamp arms (21, 22, 31, 32) pivotal relative to each other about a hinge point (23,33), and a common connector part (40) joining two or more of said clamps to each other at their hinge points.

2. The clamp assembly as claimed in claim 1, each clamp arm having a curved shape with a first end at the hinge point and a second free end.

3. The clamp assembly of any preceding claim, each clamp further comprising a locking mechanism (24, 34) for securing the clamp arms in a closed position.

4. The clamp assembly of any preceding claim, whereby the clamp arms pivot between an open position and a closed position in which the clamp arms define, between them, a space to receive a connection joint to be clamped.

5. The clamp assembly of claim 3, wherein the locking mechanism comprises a releasable latch (25, 35) provided on the clamp arms.

6. The clamp assembly of any preceding claim, having two clamps.

7. The clamp assembly of any of claims 1 to 5, having three or more clamps.

8. A fluid system comprising a valve (1) arranged in a fluid flow path to regulate the flow of fluid therethrough, the valve connected to the fluid flow path by means of a clamp assembly (10) as claimed in any preceding claim.

9. A fluid system as claimed in claim 8, where the valve has a plurality of ports (2,3) to be connected to fluid lines (4,5) of the system, and wherein the clamp assembly is arranged such that each clamp is positioned to connect a respective one of the ports to a respective one of the fluid lines.

10. A fluid system as claimed in claim 8 or 9 being a water system having a water tank connected to the valve via one or more fluid lines.

11. A method of connecting a first connector part to a second connector part to define a first fluid flow conduit therethrough, and connecting a third connector part to a fourth connector part to define a second fluid flow conduit therethrough, the method comprising aligning the first and second connector parts with each other such that a fluid flow passage through the first connector part is aligned with a fluid flow passage through the second connector part to define the first fluid flow conduit, aligning the third and fourth connector parts with each other such that a fluid flow passage through the second connector part is aligned with a fluid flow passage through the fourth connector part to define the second fluid flow conduit, positioning a clamp assembly as claimed in any of claims 1 to 7, with the arms in an open position, between the first and the second fluid flow conduits, pivoting the clamp arms of a first of the clamps to close around the first fluid flow conduit, and pivoting the clamp arms of a second of the clamps to close around the second fluid flow conduit.

12. The method of claim 11, further comprising securing the clamps around the respective fluid flow conduits by means of the locking mechanism.
